(19) **Europäisches Patentamt / European Patent Office / Office européen des brevets**

(11) **EP 4 525 316 A1**

(12) **EUROPEAN PATENT APPLICATION**
published in accordance with Art. 153(4) EPC

(43) Date of publication:
19.03.2025 Bulletin 2025/12

(21) Application number: 23814855.5

(22) Date of filing: 27.04.2023

(51) International Patent Classification (IPC):
*H04B 5/00* (2024.01)

(52) Cooperative Patent Classification (CPC):
H04B 5/48

(86) International application number:
PCT/CN2023/091363

(87) International publication number:
WO 2023/231669 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2022 CN 202210609784

(71) Applicant: Huawei Technologies Co., Ltd.
Shenzhen, Guangdong 518129 (CN)

(72) Inventors:
• YOU, Chunhua
  Shenzhen, Guangdong 518129 (CN)
• LOU, Chong
  Shenzhen, Guangdong 518129 (CN)
• TANG, Xiaowei
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COOPERATIVE ENERGY TRANSFER METHOD AND RELATED APPARATUS**

(57) This application provides a cooperative power transfer method and a related apparatus. The method includes: receiving a cooperative power transfer signal, where the cooperative power transfer signal is a superposed signal of a power transfer signal sent by a first network device and a power transfer signal sent by a second network device, and a receive peak of the power transfer signal of the first network device overlaps a receive peak of the power transfer signal of the second network device; and processing the cooperative power transfer signal. According to the method provided in this application, radio power transfer efficiency can be improved.

A terminal device receives a cooperative power transfer signal — S401

The terminal device processes the cooperative power transfer signal — S402

FIG. 4

EP 4 525 316 A1

## Description

This application claims priority to Chinese Patent Application No. 202210609784.2, filed with the China National Intellectual Property Administration on May 31, 2022 and entitled "COOPERATIVE POWER TRANSFER METHOD AND RELATED APPARATUS", which is incorporated herein by reference in its entirety.

## TECHNICAL FIELD

This application relates to the field of communication technologies, and in particular, to a cooperative power transfer method and a related apparatus.

## BACKGROUND

With the development of communication, more internet of things devices emerge. If batteries of these devices are replaced periodically, high labor and time costs are consumed. Therefore, wireless power transfer (wireless power transfer, WPT) plays an important role in the internet of things. WPT is radio frequency power transfer. To be specific, one network device sends a radio frequency power transfer signal to one or more terminal devices through radio, and then the terminal device converts the radio frequency power transfer signal into a direct current, and stores the direct current for subsequent communication. However, efficiency of performing power transfer based on one network device is extremely low, and a power transfer requirement of the terminal device cannot be satisfied.

## SUMMARY

This application provides a cooperative power transfer method and a related apparatus, to improve radio power transfer efficiency.

According to a first aspect, this application provides a cooperative power transfer method. The method is applied to a terminal device, and the method includes:

receiving a cooperative power transfer signal, where the cooperative power transfer signal is a superposed signal of a power transfer signal sent by a first network device and a power transfer signal sent by a second network device, and a receive peak of the power transfer signal of the first network device overlaps a receive peak of the power transfer signal of the second network device; and
processing the cooperative power transfer signal.

In this application, aligned receive peaks of power transfer signals of different stations are ensured when the power transfer signals arrive at the terminal device, and then the terminal device performs radio frequency-to-direct current conversion on a superposed signal (namely, a cooperative power transfer signal) of the power transfer signals of the stations, to achieve a more efficient power transfer effect.

In a possible implementation, the method further includes:

receiving a first measurement signal and a second measurement signal, where the first measurement signal and the second measurement signal are used for determining a first measurement result, and the first measurement result is used for determining the power transfer signal of the first network device and/or the power transfer signal of the second network device; and
sending the first measurement result to the first network device.

In this implementation, the first measurement result is determined based on the first measurement signal and the second measurement signal, and the first measurement result is further used to determine power transfer signals of stations, so that receive peaks of the power transfer signals of different stations are aligned when the power transfer signals arrive at the terminal device.

In a possible implementation, the method further includes:

receiving a first measurement signal and a second measurement signal, where the first measurement signal and the second measurement signal are used for determining a first measurement result, and the first measurement result is used for determining the power transfer signal of the first network device and/or the power transfer signal of the second network device; and
sending the first measurement result to a third network device, where the third network device is a central unit CU, and the first network device and the second network device are distributed units DUs.

In a possible implementation, the method further includes:

receiving a first measurement signal and a second measurement signal, where the first measurement signal and the second measurement signal are used for determining a first measurement result, and the first measurement result is used for determining the power transfer signal of the first network device and/or the power transfer signal of the second network device; and
sending the first measurement result to a third network device, where the third network device is a CU or an access network device, and the first network device and the second network device are transmission reception points TRPs.

In a possible implementation, the method further includes:

receiving measurement configuration information of the first measurement signal and measurement configuration information of the second measurement signal; and
the receiving a first measurement signal and a second measurement signal includes:
receiving the first measurement signal based on the measurement configuration information of the first measurement signal, and receiving the second measurement signal based on the measurement configuration information of the second measurement signal.

In a possible implementation, the method further includes:

receiving measurement configuration information; and
sending a third measurement signal based on the measurement configuration information, where the third measurement signal is used for determining the power transfer signal of the first network device and/or the power transfer signal of the second network device.

In a possible implementation, the first measurement result includes at least one of the following information:
a first phase difference, a first time difference, and a first peak difference between the first measurement signal and the second measurement signal.

In a possible implementation, the method further includes:
sending a power transfer request, where the power transfer request includes power information and power transfer time information that are requested by the terminal device.

In a possible implementation, the method further includes:

receiving power transfer configuration information; and
the receiving a cooperative power transfer signal includes:
receiving the cooperative power transfer signal based on the power transfer configuration information.

In a possible implementation, the power transfer configuration information includes one or more of the following information:
waveform information, frequency information, time domain resource information, frequency domain resource information, first timing duration, and a first power threshold.

In a possible implementation, the method further includes:

starting a first timer after sending the power transfer request or receiving the power transfer configuration information; and
after the first timer reaches the first timing duration, sending power status indication information, where the power status indication information indicates a power status of the terminal device.

In this implementation, when the terminal device is charged for specific time, the terminal device notifies the first network device, to stop cooperative power transfer. Therefore, unnecessary power consumption can be reduced.
In a possible implementation, the method further includes:
when power in the terminal device is greater than or equal to the first power threshold, sending power status indication information, where the power status indication information indicates a power status of the terminal device.
In this implementation, when the terminal device is charged to a specific extent, the terminal device notifies the first network device, to stop cooperative power transfer. Therefore, unnecessary power consumption can be reduced.
In a possible implementation, the method further includes:
sending a signal adjustment request, where the signal adjustment request indicates to adjust the power transfer signal of the first network device and/or the power transfer signal of the second network device.
In this implementation, because the terminal device moves, the power transfer signal of the first network device and the power transfer signal of the second network device may no longer overlap. Therefore, the signal adjustment request is sent to the first network device, so that the first network device can control the power transfer signal of the first network device and the power transfer signal of the second network device to overlap again.
In a possible implementation, the signal adjustment request includes one or more of the following information:
a second phase difference, a second time difference, and a second peak difference between the power transfer signal of the first network device and the power transfer signal of the second network device, and reference signal received power RSRP change information of the power transfer signal of the first network device or the power transfer signal of the second network device.
According to a second aspect, this application provides a cooperative power transfer method. The method is applied to a first network device, and the method includes:

sending a cooperative power transfer request to a second network device, where the cooperative power transfer request is used for requesting the second network device and the first network device to perform cooperative power transfer;

receiving a cooperative power transfer response from the second network device, where the cooperative power transfer response indicates that the second network device accepts cooperative power transfer; and

sending a power transfer signal to a terminal device.

In a possible implementation, the method further includes:

receiving a power transfer request from the terminal device, where the power transfer request includes power information and power transfer time information that are requested by the terminal device; and the sending a cooperative power transfer request to a second network device includes:

sending the cooperative power transfer request to the second network device in response to the power transfer request.

In a possible implementation, the method further includes:

receiving power status indication information from the terminal device, where the power status indication information indicates a power status of the terminal device; and

when the power status of the terminal device satisfies the power information requested by the terminal device, stopping sending the power transfer signal to the terminal device, and/or sending a cooperative power transfer release message to the second network device.

In this implementation, when it is determined that the power status of the terminal device satisfies a requirement of the terminal device, cooperative power transfer is stopped, to reduce unnecessary power consumption.

In a possible implementation, the method further includes:

sending power transfer configuration information to the terminal device; and

the sending a power transfer signal to a terminal device includes:

sending the power transfer signal to the terminal device based on the power transfer configuration information.

In a possible implementation, the power transfer configuration information includes one or more of the following information:

waveform information, frequency information, time domain resource information, frequency domain resource information, first timing duration, and a first power threshold.

In a possible implementation, the method further includes:

sending measurement configuration information of a first measurement signal and measurement configuration information of a second measurement signal to the terminal device;

sending the first measurement signal to the terminal device, where the first measurement signal and the second measurement signal are used for determining a first measurement result, and the first measurement result is used for determining a power transfer signal of the first network device and/or a power transfer signal of the second network device; and receiving the first measurement result from the terminal device.

In a possible implementation, the first measurement result includes at least one of the following information:

a first phase difference, a first time difference, and a first peak difference between the first measurement signal and the second measurement signal.

In a possible implementation, the method further includes:

receiving a signal adjustment request from the terminal device, where the signal adjustment request indicates to adjust the power transfer signal of the first network device and/or the power transfer signal of the second network device.

In a possible implementation, the signal adjustment request includes one or more of the following information:

a second phase difference, a second time difference, and a second peak difference between the power transfer signal of the first network device and the power transfer signal of the second network device, and reference signal received power RSRP change information of the power transfer signal of the first network device or the power transfer signal of the second network device.

According to a third aspect, this application provides a communication apparatus. The communication apparatus includes a module or a unit configured to perform the method according to any one of the first aspect or the second aspect.

According to a fourth aspect, this application provides a communication apparatus, including a processor, a transceiver, and a memory. The processor and the transceiver are coupled to the memory. The memory stores a computer program. The processor and the transceiver are configured to invoke the computer program in the memory, to enable the communication apparatus to perform the method according to any one of the first aspect or the second aspect.

In a possible design, the communication apparatus may be a chip or a device including a chip implementing the method in the first aspect or the second aspect.

According to a fifth aspect, this application provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect through a logic circuit or by executing code instructions.

According to a sixth aspect, this application provides a computer-readable storage medium. The storage medium stores a computer program or instructions. When the computer program or the instructions are executed by a computer, the method according to any one of the first aspect or the second aspect is implemented.

According to a seventh aspect, this application provides a computer program product. When reads and executes the computer program product, the computer is enabled to perform the method according to any one of the first aspect or the second aspect.

## BRIEF DESCRIPTION OF DRAWINGS

FIG. 1 is a diagram of a structure of a 5G communication system according to an embodiment of this application;

FIG. 2 is a schematic of a structure of a circuit for converting a radio frequency signal into a direct current according to an embodiment of this application;

FIG. 3a is a diagram of a continuous waveform according to an embodiment of this application;

FIG. 3b is a diagram of a multi-sine waveform according to an embodiment of this application;

FIG. 4 is a schematic flowchart of a cooperative power transfer method according to an embodiment of this application;

FIG. 5 is a diagram of a structure of a communication apparatus according to an embodiment of this application;

FIG. 6 is a diagram of a structure of another communication apparatus according to an embodiment of this application;

FIG. 7 is a diagram of a structure of another communication apparatus according to an embodiment of this application; and

FIG. 8 is a diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" are not intended to limit a quantity and an execution sequence, and the terms such as "first" and "second" do not indicate a definite difference.

In this application, a term such as "example" or "for example" indicates giving an example, an illustration, or a description. Any embodiment or design scheme described as an "example" or "for example" in this application should not be explained as being more preferred or having more advantages than another embodiment or design scheme. In particular, the terms such as "example" and "for example" used herein are intended to present the related concept in a specific implementation.

The technical solutions in embodiments of this application may be applied to various communication systems, for example, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a 6th generation (6th generation, 6G) system, a new radio (new radio, NR) system, a wireless local area network (Wireless Local Area Network, WLAN) system, and a future communication system, this is not limited herein.

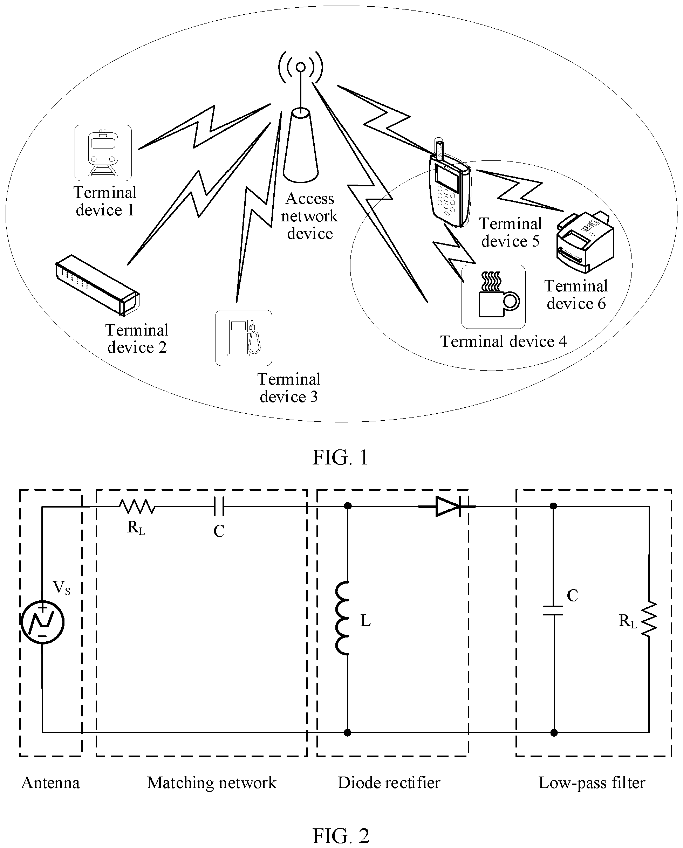

For example, a 5G communication system is used as an example for description in an embodiment of this application. FIG. 1 is a diagram of a structure of a 5G communication system according to an embodiment of this application. As shown in FIG. 1, a communication system includes an access network device and a terminal device 1 to a terminal device 6. In the communication system, the terminal device 1 to the terminal device 6 may send uplink information to the access network device, and the access network device may also send downlink information to the terminal device 1 to the terminal device 6. In addition, the terminal device 4 to the terminal device 6 may alternatively constitute a communication system.

In the communication system, the access network device may send downlink information to the terminal device 1, the terminal device 2, the terminal device 5, and the like. The terminal device 5 may also send downlink information to the terminal device 4 and the terminal device 6 The terminal device 4 and the terminal device 6 may also send uplink information to the access network device through the terminal device 5.

The terminal device in embodiments of this application is a device having a wireless transceiver function. The terminal device may also be referred to as user equipment (user equipment, UE), an access terminal (access terminal), a terminal, a subscriber unit, a subscriber station, a mobile station (mobile station), a mobile console (mobile console), a remote station (remote station), a remote terminal (remote terminal), a mobile device, a user terminal (user terminal), a wireless network device, a user agent (user agent), a user apparatus, or the like. The terminal device may be deployed on land, where the deployment includes indoor or outdoor, or handheld or vehicle-mounted deployment, may be deployed on water (for example, on a ship), or may be deployed in air (for example, on an airplane, a balloon, or a satellite). The terminal device may be a cellular phone, a cordless phone, a session initiation protocol (session initiation protocol, SIP) phone, a smartphone (smartphone), a mobile phone, a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device, a terminal in an internet of things or an internet of vehicles, a terminal in any form in a 5th generation (5th generation, 5G) network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid (smart grid), a wireless terminal in transportation security, a wireless terminal in a smart city, a wireless terminal in a smart home, or the like. This is not limited in embodiments of this application.

The access network device in this embodiment of this application may be a network device that communicates with the terminal device. The access network device, for example, includes, but is not limited to, a generation NodeB (generation NodeB, gNB), an evolved NodeB (evolved NodeB, eNB), a next generation evolved NodeB (next generation eNB, ng-eNB), a radio backhaul device, a radio network controller (radio network controller, RNC), a NodeB (NodeB, NB), a base station controller (base station controller, BSC), a base transceiver station (base transceiver station, BTS), a home NodeB (home evolved NodeB, HeNB or home NodeB, HNB), and a baseband unit (baseBand unit, BBU), a transmission reception point (transmission reception point, TRP), a transmitting point (transmitting point, TP), a mobile switching center, and the like in a 5G communication system, which is not limited herein. In addition, the access network device may alternatively be a base station in a 6G communication system, an open base station (Open RAN), a cloud base station (Cloud RAN), or the like, which is not limited herein.

It should be noted that, in this embodiment of this application, the access network device may include one or more central units (central units, CUs) and one or more distributed units (distributed units, DUs). A plurality of DUs may be controlled by one CU in a centralized manner, or one DU may be connected to a plurality of CUs.

It should be understood that this embodiment of this application may be applied to multi-station power transfer in a 5G system, for example, including the following three application scenarios.

Scenario 1: Inter-station cooperative power transfer. Network devices related to inter-station cooperative power transfer may include a primary base station and a secondary base station. The primary base station and the secondary base station may be different base stations. Generally, the primary base station has a data transmission function, and the secondary base station may have a data transmission function, or may not have the data transmission function. In the scenario 1, there is usually one primary base station, and there may be usually a plurality of secondary base stations (to be specific, two or more secondary base stations). For ease of understanding, the following embodiments of this application are mainly described by using one primary base station and one secondary base station as an example. Both the primary base station and the secondary base station may generate and send a power transfer signal to perform cooperative power transfer. Alternatively, the primary base station does not send a power transfer signal, and a plurality of secondary base stations generate and send power transfer signals to perform cooperative power transfer.

Scenario 2: Intra-station cross-DU cooperative power transfer. Network devices related to intra-station cross-DU cooperative power transfer may include a CU and a plurality of DUs (to be specific, two or more DUs) managed by the CU. The DUs are different, and the CU may control the plurality of DUs. The CU does not send a power transfer signal, but the DUs generate and send power transfer signals. In other words, the plurality of DUs send the power transfer signals to perform cooperative power transfer.

Scenario 3: Cooperative power transfer of different TRPs or pRRUs in a same cell in a station. Network devices related to cooperative power transfer of different TRPs in the same cell in the station may include an access network device (for example, a base station) or a CU corresponding to the cell, and a plurality of TRPs or a plurality of pico remote radio units (pico remote radio units, pRRUs) (for example, radio frequency units) corresponding to the cell. The TRPs or the pRRUs are different. The access network device and the CU do not send power transfer signals, but the TRPs or the pRRUs send power transfer signals. In other words, the plurality of TRPs or pRRUs generate and send the power transfer signals to perform cooperative power transfer.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

To facilitate understanding of related content in embodiments of this application, the following describes some knowledge required in the solutions in this application. It should be noted that these explanations are intended to facilitate understanding of embodiments of this application, but should not be considered as a limitation on the protection scope claimed in this application.

1. WPT

Wireless power transfer (wireless power transfer, WPT) is also referred to as wireless power transfer or contactless power transfer. Generally, WPT may include a sender and a receiver. The sender may convert a direct current signal into a radio frequency signal for power transfer, and then send the signal to the receiver via a transmit antenna. Correspondingly, the receiver may receive the power transfer signal via a receive antenna, and then perform radio frequency-to-direct current conversion, to implement wireless power transfer. Specifically, radio frequency-to-direct current conversion may be implemented through a circuit shown in FIG. 2. As shown in FIG. 2, the circuit includes four modules: an antenna, a matching network, a diode rectifier, and a low-pass filter. The antenna is responsible for receiving the radio frequency signal for power transfer, the matching network is responsible for resolving a mismatch problem of power transmission, the diode rectifier is responsible for converting peak power of the radio frequency signal into power of the direct current signal, and the low-pass filter is configured to filter signals whose frequencies are higher than a cut-off frequency.

It should be noted that, in WPT, the sender may be a network device, and the receiver may be one or more terminal devices. The receiver needs to store voltages of a plurality of times of direct current power for subsequent data transmission.

2. Power transfer waveform

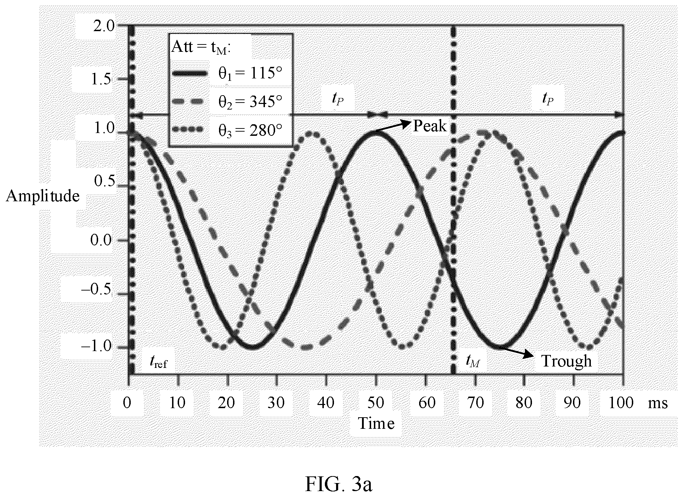

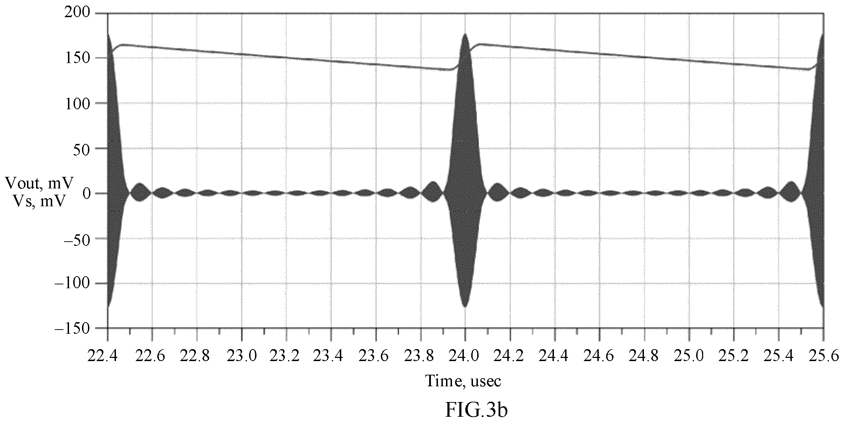

Currently, the power transfer waveform mainly includes two waveforms: a continuous waveform and a multi-sine waveform. For example, as shown in FIG. 3a, the continuous waveform is usually a single cosine waveform. The multi-sine waveform is a waveform with a higher pulse peak in appearance and obtained by superposing a plurality of cosine waveforms according to a specific rule. The superposed waveform also has a trough lasts for relatively long time, and is obtained by superposing a plurality of cosine waveforms at different frequencies. For example, the multi-sine waveform may be shown in FIG. 3b, and other types of multi-sine waveforms are not limited. Specifically, the multi-sine waveform may be represented as:

$$x(t) = \sum_{k=1}^{N} A_k \cos(w_k t + q_k) \qquad \text{Formula 1}$$
$$w_k = w_0 + (k-1)Vw$$

$N$ is a quantity of cosine waveforms in the superposed waveform, $A_k$ represents an amplitude of a $k^{th}$ cosine waveform, $\omega_k$ represents a frequency of the $k^{th}$ cosine waveform, $\theta_k$ represents an initial phase of the $k^{th}$ cosine waveform, $\omega_0$ represents an initial frequency of the $k^{th}$ cosine waveform, $v_w$ represents a subcarrier spacing or a frequency difference between the $k^{th}$ cosine waveform and a $(k+1)^{th}$ cosine waveform, and $1 \le k < N$.

It should be noted that, in embodiments of this application, the power transfer signal may also be described as a radio frequency signal, a radio frequency power transfer signal, or the like. This is not limited herein.

It should be noted that, in embodiments of this application, phase offset information of a network device may be understood as a relative phase value of a power transfer signal of the network device. The relative phase value may be a positive number or a negative number.

For example, it is assumed that a phase of the power transfer signal of the network device at reference time t0 is originally w0, and the phase offset information is represented as offset1. When offset1 is a negative number, a phase of an adjusted power transfer signal of the network device at t0 is w0-offset1. When offset1 is a positive number, a phase of an adjusted power transfer signal of the network device at t0 is w0+offset1.

It should be noted that, in embodiments of this application, time offset information of a network device may be understood as a relative time value or an absolute time value of a power transfer signal of the network device. The relative time value may be a positive number or a negative number. The positive number represents a time delay, and the negative number represents a time advance.

For example, it is assumed that reference time of the power transfer signal of the network device is originally t0, and it is assumed that the time offset information is understood as the relative time value of the power transfer signal. Herein, the relative time value of the power transfer signal is represented as offset2. When offset2 is a negative number, time of an adjusted power transfer signal of the network device is t0-offset2. When offset2 is a positive number, time of an adjusted power transfer signal of the network device is t0+offset2.

For another example, assuming that the time offset information is understood as the absolute time value, the absolute time value represents time of the power transfer signal of the network device, in other words, the absolute time value directly indicates the time of the power transfer signal of the network device.

For ease of understanding, the following embodiments of this application are described by using an example in which the time offset information is understood as the relative time value of the power transfer signal.

It should be noted that, in embodiments of this application, peak offset information of a network device may be understood as a relative time value or an absolute time value of a transmit peak of a power transfer signal of the network device. The relative time value may be a positive number or a negative number. The positive number represents a time delay, and the negative number represents a time advance.

For example, it is assumed that reference time of the transmit peak of the power transfer signal of the network device is originally t1, and it is assumed that the peak offset information is understood as the relative time value of the transmit peak of the power transfer signal. Herein, the relative time value of the transmit peak of the power transfer signal is represented as offset3. When offset2 is a negative number, time of a transmit peak of an adjusted power transfer signal of the network device is t1-offset3. When offset3 is a positive number, time of a transmit peak of an adjusted power transfer signal of the network device is t1+offset3.

For another example, assuming that the peak offset information is understood as the absolute time value, the absolute time value represents time of the transmit peak of the power transfer signal of the network device.

In embodiments of this application, the reference time of the power transfer signal or the reference time of the transmit peak of the power transfer signal may be a slot (slot) or a symbol (symbol). The reference time may be specified in a protocol or configured by the network device. For example, in the scenario 1, the reference time is configured by the primary base station; in the scenario 2, the reference time is configured by the CU; and in the scenario 3, the reference time is configured by the access network device or the CU. The relative time value may be at a slot granularity, a symbol granularity, a microsecond (μs) granularity, or the like. This is not limited herein.

It should be noted that, in embodiments of this application, a signal waveform used when the network device sends the power transfer signal may be referred to as a sending waveform for short. A signal waveform formed when the power transfer signal sent by the network device arrives at the terminal device may be referred to as a receiving waveform for short. A waveform (the sending waveform or the receiving waveform) includes a peak and a trough, for example, a peak and a trough shown in FIG. 3a.

It should be noted that, in embodiments of this application, a receive peak of the power transfer signal of the network device may be understood as a peak of the receiving waveform formed when the power transfer signal sent by the network device arrives at the terminal device. In embodiments of this application, a transmit peak may be understood as a peak of the power transfer signal sent by the network device.

It should be noted that, in embodiments of this application, receive peaks of power transfer signals of network devices overlap may also be understood as that the receive peaks of the power transfer signals of the network devices are aligned.

It should be noted that, in a related technology, efficiency of sending, by one network device through radio, a radio frequency power transfer signal to one or more terminal devices for power transfer is extremely low, and a power transfer requirement of a specific terminal device cannot be satisfied.

In view of this, this application provides a cooperative power transfer method, to improve wireless power transfer efficiency.

The following describes in detail the cooperative power transfer method and a cooperative power transfer apparatus that are provided in this application.

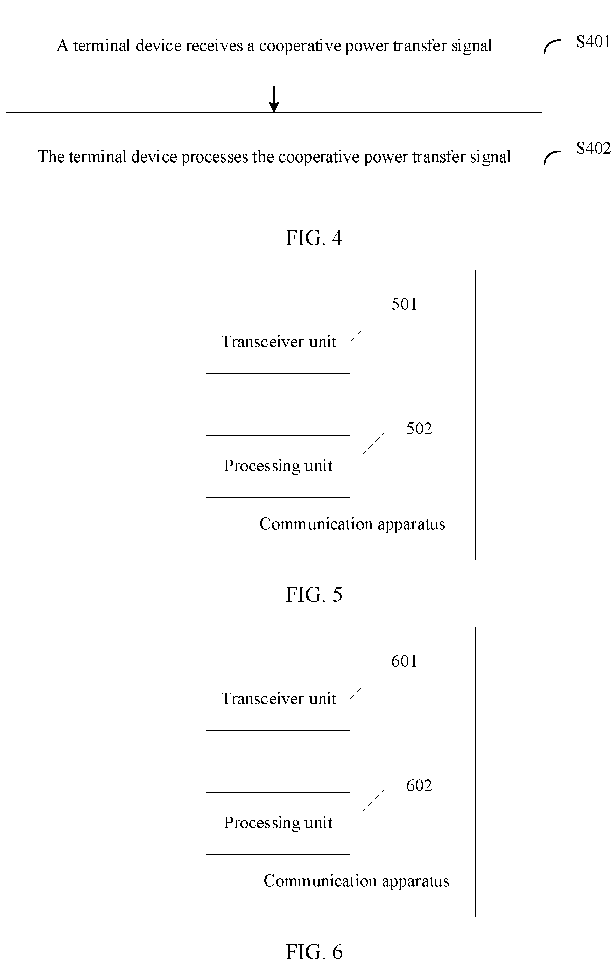

FIG. 4 is a schematic flowchart of a cooperative power transfer method according to an embodiment of this application. As shown in FIG. 4, the communication method includes the following step S401 and step S402.

S401: A terminal device receives a cooperative power transfer signal.

The cooperative power transfer signal is a superposed signal of a power transfer signal sent by a first network device and a power transfer signal sent by a second network device. In other words, the first network device and the second network device may separately send the power transfer signal to the terminal device. The superposed signal formed when the power transfer signals sent by the network devices arrive at the terminal device is the cooperative power transfer signal. A waveform of the power transfer signal of the network device (for example, the first network device or the second network device) includes a peak and a trough. Herein, a receive peak of the power transfer signal of the first network device overlaps a receive peak of the power transfer signal of the second network device.

It should be noted that, in this embodiment of this application, receive peak overlapping may be understood as precise overlapping. To be specific, the receive peaks of the power transfer signals of the network devices have same or similar time, or the receive peaks of the power transfer signals of the network devices have a same or similar phase. For example, a time difference between the receive peaks of the power transfer signals of the network devices is in a range of [-30 μs, 30 μs]. For another example, a phase difference between the receive peaks of the power transfer signals of the network devices is in a range of [-30°, 30°].

In an implementation, when a frequency of the power transfer signal sent by the first network device and a frequency of the power transfer signal sent by the second network device are the same, receive peaks of the power transfer signal of the first network device and receive peaks of the power transfer signal of the second network device each include a same quantity of peaks in a same time range, and these peaks may all overlap. Herein, that the receive peaks of the power transfer signal of the first network device and the receive peaks of the power transfer signal of the second network device all overlap may be understood as follows: Peaks of a receiving waveform formed when the power transfer signal sent by the first network device arrives at the terminal device and peaks of a receiving waveform formed when the power transfer signal sent by the second network device arrives at the terminal device overlap one by one in the same time range.

In another implementation, when a frequency of the power transfer signal sent by the first network device and a frequency of the power transfer signal sent by the second network device are different, receive peaks of the power transfer signal of the first network device and receive peaks of the power transfer signal of the second network device include different quantities of peaks in a same time range, and these peaks may partially overlap.

It should be noted that, in the scenario 1, in this embodiment of this application, the first network device is a primary base station, and the second network device is a secondary base station. There may be a plurality of second network devices. For ease of understanding, the following mainly uses one second network device as an example for description.

It should be noted that, in the scenario 2, both the first network device and the second network device may be DUs.

It should be noted that, in the scenario 3, both the first network device and the second network device may be TRPs.

S402: The terminal device processes the cooperative power transfer signal.

In some feasible implementations, that the terminal device processes the cooperative power transfer signal may be understood as follows: The terminal device converts the received cooperative power transfer signal into a direct current for subsequent use. For example, the terminal device may use the circuit shown in FIG. 2 to convert the cooperative power transfer signal into the direct current.

It may be understood that, overlapped receive peaks of power transfer signals of different stations are ensured when the power transfer signals arrive at the terminal device, to form a higher signal receive peak, so that the terminal device can obtain a high peak receiving voltage, and store the peak receiving voltage. Therefore, a more efficient power transfer effect is achieved.

It should be noted that, before step S401, the following step S40 to step S44 may be further included.

S40: The terminal device sends cooperative power transfer capability indication information.

The cooperative power transfer capability indication information indicates that the terminal device supports cooperative power transfer, or the cooperative power transfer capability indication information indicates that the terminal device has a capability of cooperative power transfer.

Specifically, in the scenario 1, the terminal device may report the cooperative power transfer capability indication information to the first network device. Herein, the first network device is the primary base station, and the second network device is the secondary base station.

Specifically, in the scenario 2, the terminal device may report the cooperative power transfer capability indication information to a CU. For ease of description, the following may describe the CU in the scenario 2 as a third network device. Herein, the first network device and the second network device may be understood as the DUs.

Specifically, in the scenario 3, the terminal device may report the cooperative power transfer capability indication information to an access network device or a CU. For ease of description, the access network device or the CU in the scenario 3 may be collectively referred to as a third network device below. Herein, the first network device and the second network device may be understood as the TRPs.

It should be noted that step S40 herein is an optional step.

It may be understood that because distances between the terminal device and different network devices are different, there is a phase difference, a time difference, or a peak difference when same signals arrive at the terminal device. Therefore, after the optional step S40 and before the first network device and the second network device send the power transfer signals to the terminal device, a phase difference, a time difference, or a peak difference between arrival signals of different network devices needs to be first measured. Generally, there are mainly two manners of measuring the phase difference, the time difference, or the peak difference. One is measurement performed by the terminal device, and the other is measurement performed by the network device. The following separately describes the two measurement manners in detail.

Manner a: The terminal device performs measurement.

S41a: The terminal device receives a first measurement signal and a second measurement signal.

The first measurement signal corresponds to the first network device, and the second measurement signal corresponds to the second network device. In other words, the first measurement signal is sent by the first network device to the terminal device, and the second measurement signal is sent by the second network device to the terminal device. For example, the first measurement signal may be a multi-sine signal, and the second measurement signal may be a multi-sine signal. The first measurement signal and the second measurement signal may be same multi-sine signals. For example, $N$, $\omega_k$, $\theta_k$, and $\omega_0$ are the same, and $A_k$ and $v_w$ may be the same or may be different. For understanding of $N$, $A_k$, $\omega_k$, $\theta_k$, $\omega_0$, and $v_w$, refer to the foregoing descriptions of the parameters in Formula 1. Details are not described herein again.

It may be understood that the first measurement signal and the second measurement signal in this embodiment of this application may be used for determining a first measurement result. The first measurement result is used for determining the power transfer signal of the first network device and/or the power transfer signal of the second network device, so that the receive peak of the power transfer signal of the second network device overlaps the receive peak of the power transfer signal of the first network device.

It should be noted that, in this embodiment of this application, determining a power transfer signal of a network device may be specifically understood as determining a sending waveform of the power transfer signal of the network device, for example, determining occurrence time of a peak of the sending waveform, so that the occurrence time of the transmit peak is earlier or later than occurrence time of a transmit peak of a measurement signal corresponding to the power transfer signal.

The first network device is used as an example. Determining the power transfer signal of the first network device may be understood as determining occurrence time of a peak of a sending waveform of the power transfer signal of the first network device, so that the occurrence time of the transmit peak is earlier or later than occurrence time of a transmit peak of the first measurement signal. The second network device is used as an example. Determining the power transfer signal of the second network device may be understood as determining occurrence time of a peak of a sending waveform of the power transfer signal of the second network device, so that the occurrence time of the transmit peak is earlier or later than occurrence time of a transmit peak of the second measurement signal.

It should be noted that before the terminal device receives the first measurement signal and the second measurement signal, the terminal device may further receive measurement configuration information of the first measurement signal and measurement configuration information of the second measurement signal, to further receive the first measurement signal based on the measurement configuration information of the first measurement signal and receive the second measurement signal based on the measurement configuration information of the second measurement signal. The measurement configuration information of the first measurement signal and the measurement configuration information of the second measurement signal may be carried in a same piece of information for transmission, or may be respectively carried in two pieces of information for transmission. This is not limited herein.

Generally, measurement configuration information of a measurement signal may include parameters such as a downlink time-frequency resource and a downlink signal sequence. Therefore, the terminal device may receive, on the downlink time-frequency resource, the measurement signal corresponding to the downlink signal sequence. A downlink time-frequency resource of the first measurement signal and a downlink time-frequency resource of the second measurement signal may be the same or may be different. This is not limited herein. Optionally, a downlink signal sequence of the first measurement signal and a downlink signal sequence of the second measurement signal may be the same or may be different. This is not limited herein.

Specifically, in the scenario 1, the first network device (namely, the primary base station) may send the measurement configuration information to the terminal device. Correspondingly, the terminal device receives the measurement configuration information from the first network device, and the terminal device may further receive the first measurement signal from the first network device and the second measurement signal from the second network device (namely, the secondary base station) based on the measurement configuration information. For example, the first network device and the second network device may send same measurement signals on a same time-frequency resource or different time-frequency resources. Therefore, the terminal device can measure a phase difference, a time difference, or a peak difference of the measurement signal (for example, a peak), or a phase value of the first network device and a phase value of the second network device when the measurement signal arrives at the terminal device.

In the scenario 2, the third network device (namely, the CU) may send the measurement configuration information to the terminal device. Correspondingly, the terminal device receives the measurement configuration information from the third network device, and the terminal device may further receive the first measurement signal from the first network device (namely, the DU) and the second measurement signal from the second network device (namely, the DU) based on the measurement configuration information.

In the scenario 3, the third network device (namely, the CU or the access network device) may send the measurement configuration information to the terminal device. Correspondingly, the terminal device receives the measurement configuration information from the third network device, and the terminal device may further receive the first measurement signal from the first network device (namely, the TRP) and the second measurement signal from the second network device (namely, the TRP) based on the measurement configuration information.

S42a: The terminal device sends the first measurement result.

It should be noted that, in the scenario 1, the terminal device may send the first measurement result to the first network device.

It should be noted that, in the scenario 2, the terminal device may send the first measurement result to the third network device (namely, the CU). In the scenario 3, the terminal device may send the first measurement result to the third network device (namely, the CU or the access network device). In other words, in the scenario 2 and the scenario 3, the terminal device may send the first measurement result to the third network device.

The first measurement result may include one or more of a first phase difference, a first time difference, a first peak difference, and the like between the first measurement signal and the second measurement signal. The first phase difference=a receiving phase of the first measurement signal-a receiving phase of the second measurement signal, or the first phase difference=the receiving phase of the second measurement signal-the receiving phase of the first measurement signal. The first time difference=receiving time of the first measurement signal-receiving time of the second measurement signal, or the first time difference=the receiving time of the second measurement signal-the receiving time of the first measurement signal. The first peak difference=time of a receive peak of the first measurement signal-time of a receive peak of the second measurement signal, or the first peak difference=the time of the receive peak of the second measurement signal-the time of the receive peak of the first measurement signal.

It should be noted that information about the phase difference, the time difference, or the peak difference may be at a beam level, and is, for example, a receiving phase difference, a receiving time difference, or a receive peak difference between a beam 1 of the first network device and a beam 3 of the second network device. If the first network device or the second network device performs beam switching, for example, the first network device switches from the beam 1 to a beam 2, the terminal device needs to send the information about the phase difference, the time difference, or the peak difference again. If a plurality of measurement signals are configured for the terminal device, and one measurement signal corresponds to one measurement signal identifier used for identifying the measurement signal, the terminal device needs to report inter-station phase differences, time differences, or peak differences of the measurement signals, and each measurement signal corresponds to a beam of a corresponding network device. In this way, power transfer may be performed through a plurality of beams at the same time.

Manner b: The network device performs measurement.

S41b: The terminal device receives measurement configuration information.

It should be noted that, in the scenario 1, the terminal device may receive the measurement configuration information from the first network device.

It should be noted that, in the scenario 2 and the scenario 3, the terminal device may receive the measurement configuration information from the third network device. The measurement configuration information may include parameters such as an uplink time-frequency resource and an uplink signal sequence.

S42b: The terminal device sends a third measurement signal based on the measurement configuration information.

The third measurement signal is used for determining the power transfer signal of the first network device and/or the power transfer signal of the second network device, so that the receive peak of the power transfer signal of the second network device overlaps the receive peak of the power transfer signal of the first network device. The third measurement signal may be a sounding reference signal (sounding reference signal, SRS) or the like. The SRS may be a conventional SRS signal, or may be a multi-sine signal. This is not limited herein.

In an implementation, the terminal device may send one SRS, and both the first network device and the second network device perform measurement. To be specific, the first network device and the second network device respectively measure arrival phase values, arrival time, or arrival peaks when the first network device and the second network device separately receive the SRS, and then exchange the arrival phase values, the arrival time, or the arrival peaks between stations. Therefore, an inter-station phase difference, time difference, or peak difference may be determined, so that occurrence time of transmit peaks of power transfer signals sent by network devices is determined based on the inter-station phase difference, time difference, or peak difference.

In another implementation, the terminal device may alternatively send two SRSs (for example, a first SRS and a second SRS), and sending time of the two SRSs is the same or aligned. The first network device receives and measures an arrival phase value, arrival time, or an arrival peak of the first SRS. The second network device receives and measures an arrival phase value, arrival time, or an arrival peak of the second SRS. Then, the first network device and the second network device exchange the arrival phase values, the arrival time, or the arrival peaks between stations. Therefore, an inter-station phase difference, time difference, or peak difference may be determined, so that occurrence time of transmit peaks of power transfer signals sent by network devices is determined based on the inter-station phase difference, time difference, or peak difference.

For example, in the scenario 1, the second network device may send, to the first network device, an arrival phase value, arrival time, or an arrival peak measured by the second network device, to enable the first network device to determine a phase difference, a time difference, or a peak difference between arrival signals of the first network device and the second network device, so that occurrence time of transmit peaks of the power transfer signal sent by the first network device and the power transfer signal sent by the second network device is determined based on the inter-station phase difference, time difference, or peak difference.

For example, in the scenario 2 and the scenario 3, the first network device and the second network device may send, to the third network device, arrival phase values, arrival time, or arrival peaks respectively measured by the first network device and the second network device, to enable the third network device to determine a phase difference, a time difference, or a peak difference between arrival signals of the first network device and the second network device, so that occurrence time of transmit peaks of the power transfer signal sent by the first network device and the power transfer signal sent by the second network device is determined based on the inter-station phase difference, time difference, or peak difference.

It should be noted that, after the foregoing step S41a and step S42a are sequentially performed, or after the foregoing step S41b and step S42b are performed, for the scenario 1, one or more of the following step S43 to step S410 may be further performed. For the scenario 2 or the scenario 3, one or more of the following step S44' to step S410' may be further performed.

The following separately describes in detail the solutions in the scenario 1, the scenario 2, and the scenario 3.

For the scenario 1:
S43: The terminal device sends a power transfer request to the first network device.

Correspondingly, the first network device receives the power transfer request from the terminal device, and the first network device may further send a cooperative power transfer request to the second network device based on the power transfer request. The cooperative power transfer request is used for requesting the second network device and the first network device to perform cooperative power transfer. In other words, after receiving the power transfer request, if the first network device determines that power requested by the terminal is large and cooperative power transfer is needed to satisfy a power transfer requirement, the first network device may send the cooperative power transfer request to the second network device. Correspondingly, the second network device receives the cooperative power transfer request from the first network device.

The power transfer request may include one or more of power information, power transfer time information, and the like that are requested by the terminal device. For example, the power information may be received power of the terminal device, transmit power of the network device, or the like. This is not limited herein.

The cooperative power transfer request may include one or more of waveform information of the power transfer signal or the cooperative power transfer signal, frequency information of the power transfer signal or the cooperative power transfer signal, time domain resource information of the power transfer signal or the cooperative power transfer signal, frequency domain resource information of the power transfer signal or the cooperative power transfer signal, second phase offset information, second time offset information, second peak offset information, and the like. The waveform information of the power transfer signal or the cooperative power transfer signal may be a basic waveform of the power transfer signal or the cooperative power transfer signal. For example, the basic waveform may be a cosine waveform or a multi-sine waveform. This is not limited herein.

Optionally, the cooperative power transfer request may further include power transfer assistance information, for example, one or more of the power information (for example, the received power) requested by the terminal device, the power transfer time information requested by the terminal device, and cooperative power transfer. This is not limited herein. It should be noted that if a waveform of the power transfer signal or the cooperative power transfer signal is a multi-sine waveform, the cooperative power transfer request further needs to carry at least one of the following parameters: $N$, $A_k$, $\omega_k$, $\theta_k$, $\omega_0$, and $v_w$. For understanding of $N$, $A_k$, $\omega_k$, $\theta_k$, $\omega_0$, and $v_w$, refer to the foregoing descriptions of the parameters in Formula 1. Details are not described herein again.

It may be understood that if the second network device accepts cooperative power transfer, the second network device may send a cooperative power transfer response to the first network device. The cooperative power transfer response indicates that the second network device accepts cooperative power transfer. Herein, the second network device may alternatively refuse to accept cooperative power transfer. In this case, the second network device may send a cooperative power transfer failure message to the second network device. The cooperative power transfer failure message may include a cause value, for example, insufficient available power. Optionally, if the second network device determines that the currently sent second phase offset information (for example, a phase offset A), second time offset information (for example, a time offset B), or second peak offset information (for example, a peak offset C) is unacceptable, the cooperative power transfer failure message may further carry phase offset information (for example, a phase offset A'), time offset information (for example, a time offset B'), or peak offset information (for example, a peak offset C') that can be accepted by the second network device. A value of the phase offset A is different from a value of the phase offset A', a value of the time offset B is different from a value of the time offset B', and a value of the peak offset C is different from a value of the peak offset C'. Therefore, when the first network device subsequently initiates the cooperative power transfer request again, the phase offset information (for example, the phase offset A'), the time offset information (for example, the time offset B'), or the peak offset information (for example, the peak offset C') that can be accepted by the second network device may be carried in the cooperative power transfer request. Herein, the following embodiment of this application is mainly described by using an example in which the second network device accepts cooperative power transfer.

Specifically, if the second network device accepts cooperative power transfer, the second network device may send the power transfer signal based on the second phase offset information, the second time offset information, or the second peak offset information in the cooperative power transfer request.

Optionally, the first network device may determine first phase offset information, first time offset information, or the first peak offset information, and the first network device further sends the power transfer signal based on the first phase offset information, the first time offset information, or the first peak offset information, so that the receive peak of the power transfer signal of the second network device overlaps the receive peak of the power transfer signal of the first network device when the power transfer signals arrive at the terminal device.

It should be noted that the first phase offset information and/or the second phase offset information may be determined based on the first phase difference. The first time offset information and/or the second time offset information may be determined based on the first time difference. The first peak offset information and/or the second peak offset information may be determined based on the first peak difference.

For example, a sum of the first phase offset information and the second phase offset information is equal to the first phase difference. In a first implementation, the first phase offset information may be set to 0, and it indicates that the waveform of the power transfer signal of the first network device is completely the same as a waveform of the first measurement signal, and a phase of the power transfer signal of the second network device-a phase of the second measurement signal=the first phase difference. In a second implementation, the second phase offset information may be set to 0, and it indicates that the waveform of the power transfer signal of the second network device is completely the same as a waveform of the second measurement signal, and a phase of the power transfer signal of the first network device-a phase of the first measurement signal=the first phase difference. In a third implementation, neither the first phase offset information nor the second phase offset information is 0, and it indicates that (a phase of the power transfer signal of the first network device-a phase of the first measurement signal)+(a phase of the power transfer signal of the second network device-a phase of the second measurement signal)=the first phase difference.

For example, a sum of the first time offset information and the second time offset information is equal to the first time difference. In a first implementation, the first time offset information may be set to 0, and it indicates that the waveform of the power transfer signal of the first network device is completely the same as a waveform of the first measurement signal, and time of the power transfer signal of the second network device-time of the second measurement signal=the first time difference. In a second implementation, the second time offset information may be set to 0, and it indicates that the waveform of the power transfer signal of the second network device is completely the same as a waveform of the second measurement signal, and time of the power transfer signal of the first network device-time of the first measurement signal=the first time difference. In a third implementation, neither the first time offset information nor the second time offset information is 0, and it indicates that (time of the power transfer signal of the first network device-time of the first measurement signal)+(time of the power transfer signal of the second network device-time of the second measurement signal)=the first time difference.

For example, a sum of the first peak offset information and the second peak offset information is equal to the first peak difference. In a first implementation, the first peak offset information may be set to 0, and it indicates that the waveform of the power transfer signal of the first network device is completely the same as a waveform of the first measurement signal, and time of the transmit peak of the power transfer signal of the second network device-time of a transmit peak of the second measurement signal=the first peak difference. In a second implementation, the second peak offset information may be set to 0, and it indicates that the waveform of the power transfer signal of the second network device is completely the same as a waveform of the second measurement signal, and time of the transmit peak of the power transfer signal of the first network device-time of a transmit peak of the first measurement signal=the first peak difference. In a third implementation, neither the first peak offset information nor the second peak offset information is 0, and it indicates that (time of the transmit peak of the power transfer signal of the first network device-time of a transmit peak of the first measurement signal)+(time of the transmit peak of the power transfer signal of the second network device-time of a transmit peak of the second measurement signal)=the first peak difference.

Optionally, before the first network device sends the power transfer signal to the terminal device, the following step S44 may be further included.

S44: The first network device sends power transfer configuration information to the terminal device, and correspondingly, the terminal device receives the power transfer configuration information from the first network device.

The power transfer configuration information is sent to the terminal device by using dedicated signaling or a system message, and may include at least one of the waveform information of the power transfer signal or the cooperative power transfer signal, the frequency information of the power transfer signal or the cooperative power transfer signal, the time domain resource information of the power transfer signal or the cooperative power transfer signal, the frequency domain resource information of the power transfer signal or the cooperative power transfer signal, and the like. In addition, the power transfer configuration information may further include one or more of information such as first timing duration, a first power threshold, a phase difference threshold, a time difference threshold, a peak difference threshold, a reference signal received power (reference signal received power, RSRP) threshold, and second timing duration. This is specifically determined based on an actual application scenario, and is not limited herein.

It should be noted that, for the first network device, the first network device may send the power transfer signal to the terminal device based on the power transfer configuration information. For the second network device, the second network device may determine a phase, sending time, or a transmit peak on a power transfer time-frequency resource based on the second phase offset information, the second time offset information, or the second peak offset information in the cooperative power transfer request, so that the receive peak of the power transfer signal of the second network device overlaps the receive peak of the power transfer signal of the first network device when the power transfer signals arrive at the terminal device. Correspondingly, the terminal device may receive the cooperative power transfer signal based on the power transfer configuration information, perform radio frequency-to-direct current conversion on the cooperative power transfer signal, and then store direct current power to complete power transfer.

For example, the power transfer signal of the first network device may be a multi-sine signal, and the power transfer signal of the second network device may be a multi-sine signal. The power transfer signal of the first network device and the power transfer signal of the second network device may be same multi-sine signals. For example, $N$, $\omega_k$, $\theta_k$, and $\omega_0$ are the same, and $A_k$ and $v_w$ may be the same or may be different. For understanding of $N$, $A_k$, $\omega_k$, $\theta_k$, $\omega_0$, and $v_w$, refer to the foregoing descriptions of the parameters in Formula 1. Details are not described herein again.

Optionally, after the foregoing step S43 or step S44, to be specific, after the terminal device sends the power transfer request or receives the power transfer configuration information, the terminal device may further perform the following step S45, step S46, and step S48, or perform the following step S47 and step S48.

S45: After the terminal device sends the power transfer request or receives the power transfer configuration information, the terminal device starts a first timer.

S46: After the first timer reaches the first timing duration, the terminal device sends power status indication information to the first network device.

Correspondingly, the first network device receives the power status indication information from the terminal device.

S47: When power in the terminal device is greater than or equal to the first power threshold, the terminal device sends the power status indication information to the first network device.

Correspondingly, the first network device receives the power status indication information from the terminal device. The power status indication information indicates a power status of the terminal device.

S48: When the power status of the terminal device indicated by the power status indication information satisfies the power information requested by the terminal device, the first network device may stop sending the power transfer signal to the terminal device, and/or the first network device may send a cooperative power transfer release message to the second network device, to notify the second network device to stop cooperative power transfer.

It may be understood that, when the terminal device is fully charged, the terminal device notifies the first network device, to stop cooperative power transfer. Therefore, unnecessary power consumption can be reduced.

It should be noted that because the terminal device may move during power transfer, when the power status of the terminal device does not satisfy the power information requested by the terminal device, the receive peaks of the power transfer signal sent by the first network device and the power transfer signal sent by the second network device may no longer overlap or there may be less overlapped receive peaks. Consequently, a peak of the power transfer signal becomes short, and power transfer efficiency becomes low. In this case, the following step S49 and step S410 need to be performed to implement re-overlapping of the receive peaks of the power transfer signal sent by the first network device and the power transfer signal sent by the second network device, until the power status of the terminal device satisfies the power information requested by the terminal device, and then cooperative power transfer is stopped.

S49: The terminal device sends a signal adjustment request to the first network device.

Correspondingly, the first network device receives the signal adjustment request from the terminal device, and adjusts the power transfer signal of the first network device and/or the power transfer signal of the second network device based on the signal adjustment request, so that the receive peak of the power transfer signal of the second network device overlaps the receive peak of the power transfer signal of the first network device again.

Specifically, in an implementation, that the terminal device sends the signal adjustment request to the first network device may be understood as follows: When determining that a second phase difference between the power transfer signal of the first network device and the power transfer signal of the second network device is greater than or equal to the phase difference threshold, the terminal device sends the signal adjustment request to the first network device.

In another implementation, that the terminal device sends the signal adjustment request to the first network device may be understood as follows: When determining that a second time difference between the power transfer signal of the first network device and the power transfer signal of the second network device is greater than or equal to the time difference threshold, the terminal device sends the signal adjustment request to the first network device.

In another implementation, that the terminal device sends the signal adjustment request to the first network device may be understood as follows: When determining that a second peak difference between the power transfer signal of the first network device and the power transfer signal of the second network device is greater than or equal to the peak difference threshold, the terminal device sends the signal adjustment request to the first network device.

In another implementation, that the terminal device sends the signal adjustment request to the first network device may be understood as follows: When determining that an absolute value of a difference between a first reference signal received power RSRP value and a second RSRP value of the first network device or the second network device is greater than or equal to the RSRP threshold, the terminal device sends the signal adjustment request to the first network device. The second RSRP value is a previous RSRP value of the first RSRP value.

In another implementation, after the terminal device sends the power transfer request to the first network device or receives the power transfer configuration information, and before the terminal device sends the signal adjustment request, the terminal device may further start a second timer. After the second timer reaches the second timing duration, the terminal device sends the signal adjustment request to the first network device.

The signal adjustment request may include one or more of the following information: a second phase difference, a second time difference, and a second peak difference between the power transfer signal of the first network device and the power transfer signal of the second network device, and RSRP change information.

The second phase difference=a receiving phase of the power transfer signal of the first network device-a receiving phase of the power transfer signal of the second network device, or the second phase difference=the receiving phase of the power transfer signal of the second network device-the receiving phase of the power transfer signal of the first network device. The second time difference=receiving time of the power transfer signal of the first network device-receiving time of the power transfer signal of the second network device, or the second time difference=the receiving time of the power transfer signal of the second network device-the receiving time of the power transfer signal of the first network device. The second peak difference=time of the receive peak of the power transfer signal of the first network device-time of the receive peak of the power transfer signal of the second network device, or the second peak difference=the time of the receive peak of the power transfer signal of the second network device-the time of the receive peak of the power transfer signal of the first network device. The RSRP change information=the first RSRP value-the second RSRP value, or the RSRP change information=the second RSRP value-the first RSRP value. The second RSRP value is the previous RSRP value of the first RSRP value.

It may be understood that when the signal adjustment request includes the RSRP change information, the first network device may estimate phase difference information, that is, the second phase difference, based on the RSRP change information, and then adjust the power transfer signal.

It should be noted that the first network device may adjust the power transfer signal of the first network device and/or the power transfer signal of the second network device based on the signal adjustment request in the following three implementations.

Implementation 1: The first network device determines third phase offset information, third time offset information, or third peak offset information based on the signal adjustment request, and adjusts the power transfer signal of the first network device based on the third phase offset information, the third time offset information, or the third peak offset information, so that the receive peak of the power transfer signal of the second network device overlaps the receive peak of the power transfer signal of the first network device again.

Implementation 2: After receiving the signal adjustment request of the terminal device, the first network device determines fourth phase offset information, fourth time offset information, or fourth peak offset information, and sends the cooperative power transfer request to the second network device again. The cooperative power transfer request may include the fourth phase offset information, the fourth time offset information, or the fourth peak offset information. Therefore, the second network device may adjust the power transfer signal of the second network device based on the fourth phase offset information, the fourth time offset information, or the fourth peak offset information, so that the receive peak of the power transfer signal of the second network device overlaps the receive peak of the power transfer signal of the first network device again.

Implementation 3: The first network device determines third phase offset information, third time offset information, or third peak offset information, and fourth phase offset information, fourth time offset information, or fourth peak offset information based on the signal adjustment request. Then, the first network device sends the cooperative power transfer request to the second network device again. The cooperative power transfer request may include the fourth phase offset information, the fourth time offset information, or the fourth peak offset information. Therefore, the first network device may adjust the power transfer signal of the first network device based on the third phase offset information, the third time offset information, or the third peak offset information, and the second network device may adjust the power transfer signal of the second network device based on the fourth phase offset information, the fourth time offset information, or the fourth peak offset information, so that the receive peak of the power transfer signal of the second network device overlaps the receive peak of the power transfer signal of the first network device again.

It should be noted that the third phase offset information and/or the fourth phase offset information may be determined based on the second phase difference. The third time offset information and/or the fourth time offset information may be determined based on the second time difference. The third peak offset information and/or the fourth peak offset information may be determined based on the second peak difference.

For more understanding of determining the third phase offset information and/or the fourth phase offset information based on the second phase difference, determining the third time offset information and/or the fourth time offset information based on the second time difference, or determining the third peak offset information and/or the fourth peak offset information based on the second peak difference, refer to the related descriptions of determining the first phase offset information and/or the second phase offset information based on the first phase difference, determining the first time offset information and/or the second time offset information based on the first time difference, or determining the first peak offset information and/or the second peak offset information based on the first peak difference in S43. Details are not described herein again.

Time adjustment is used as an example. It is assumed that time at which the first network device initially sends the power transfer signal is t0, and time at which the second network device initially sends the power transfer signal is t1, so that the receive peaks of the power transfer signal sent by the first network device and the power transfer signal sent by the second network device can be aligned when the power transfer signals arrive at the terminal device. However, as the terminal device moves, the receiving time of the power transfer signal of the first network device-the receiving time of the power transfer signal of the second network device=5 μs. In this case, subsequently, the first network device may send the power transfer signal at (t0-5 μs), and the second network device still sends the power transfer signal at the time t1; the first network device may send the power transfer signal at the time t0, and the second network device may send the power transfer signal at (t+5 μs); or the first network device may send the power transfer signal at (t0-2.5 μs), and the second network device may send the power transfer signal at (t+2.5 μs), so that the receive peaks of the power transfer signal sent by the first network device and the power transfer signal sent by the second network device are aligned again when the power transfer signals arrive at the terminal device.

S410: The first network device and the second network device send adjusted power transfer signals to the terminal device.

Correspondingly, the terminal device receives the adjusted power transfer signals sent by the first network device and the second network device. Receive peaks of the adjusted power transfer signals of the network devices overlap.

It may be understood that because the terminal device moves, the power transfer signal of the first network device and the power transfer signal of the second network device no longer overlap or there are less overlapped receive peaks. The signal adjustment request is sent to the first network device, so that the first network device can control the power transfer signal of the first network device and the power transfer signal of the second network device to overlap again.

For the scenario 2 and the scenario 3:
S43': The terminal device sends a power transfer request to the third network device.

Correspondingly, the third network device receives the power transfer request from the terminal device, and the third network device may further control, based on the power transfer request, the first network device and the second network device to cooperatively transfer power to the terminal device.

The power transfer request may include one or more of power information, power transfer time information, and the like that are requested by the terminal device. For example, the power information may be received power of the terminal device, transmit power of the network device, or the like. This is not limited herein.

It may be understood that the third network device may control the first network device to adjust a phase, sending time, or a transmit peak of the first network device on a power transfer time-frequency resource based on first phase offset information, first time offset information, or first peak offset information, and control the second network device to adjust a phase, sending time, or a transmit peak of the second network device on a power transfer time-frequency resource based on second phase offset information, second time offset information, or second peak offset information, so that the receive peak of the power transfer signal of the second network device overlaps the receive peak of the power transfer signal of the first network device when the power transfer signals arrive at the terminal device.

It should be noted that the first phase offset information and/or the second phase offset information may be determined based on the first phase difference. The first time offset information and/or the second time offset information may be determined based on the first time difference. The first peak offset information and/or the second peak offset information may be determined based on the first peak difference.

For more understanding of determining the first phase offset information and/or the second phase offset information based on the first phase difference, determining the first time offset information and/or the second time offset information based on the first time difference, or determining the first peak offset information and/or the second peak offset information based on the first peak difference, refer to the related descriptions in S43. Details are not described herein again.

Optionally, in the scenario 2 and the scenario 3, after the third network device receives the power transfer request from the terminal device, the following step S44' may be further included.

S44': The third network device sends power transfer configuration information to the terminal device, and correspondingly, the terminal device receives the power transfer configuration information from the third network device.

The power transfer configuration information may include at least one of waveform information of the power transfer signal or the cooperative power transfer signal, frequency information of the power transfer signal or the cooperative power transfer signal, time domain resource information of the power transfer signal or the cooperative power transfer signal, frequency domain resource information of the power transfer signal or the cooperative power transfer signal, and the like. In addition, the power transfer configuration information may further include one or more of information such as first timing duration, a first power threshold, a phase difference threshold, a time difference threshold, a peak difference threshold, a reference signal received power (reference signal received power, RSRP) threshold, and second timing duration. This is specifically determined based on an actual application scenario, and is not limited herein. Therefore, the first network device may send the power transfer signal to the terminal device based on the power transfer configuration information. Correspondingly, the terminal device may receive the cooperative power transfer signal based on the power transfer configuration information, perform radio frequency-to-direct current conversion on the cooperative power transfer signal, and then store direct current power to complete power transfer.

Optionally, after the foregoing step S43' or step S44', to be specific, after the terminal device sends the power transfer request or receives the power transfer configuration information, the terminal device may further perform the following step S45', step S46', and step S48', or perform the following step S47' and step S48'.

S45': After the terminal device sends the power transfer request or receives the power transfer configuration information, the terminal device starts a first timer.

S46': After the first timer reaches the first timing duration, the terminal device sends power status indication information to the third network device.

Correspondingly, the third network device receives the power status indication information from the terminal device.

S47': When power in the terminal device is greater than or equal to the first power threshold, the terminal device sends the power status indication information to the third network device.

Correspondingly, the third network device receives the power status indication information from the terminal device. The power status indication information indicates a power status of the terminal device.

S48': When the power status of the terminal device indicated by the power status indication information satisfies the power information requested by the terminal device, the third network device may control the first network device and/or the second network device to stop sending the power transfer signal to the terminal device.

It may be understood that, when the terminal device is fully charged, the terminal device notifies the third network device, so that the third network device controls the first network device and the second network device to stop cooperative power transfer. Therefore, unnecessary power consumption can be reduced.

It should be noted that because the terminal device may move during power transfer, when the power status of the terminal device does not satisfy the power information requested by the terminal device, the receive peaks of the power transfer signal sent by the first network device and the power transfer signal sent by the second network device may no longer overlap or there may be less overlapped receive peaks. Consequently, a peak of the power transfer signal becomes short, and power transfer efficiency becomes low. In this case, the following step S49' and step S410' need to be performed to implement re-overlapping of the receive peaks of the power transfer signal sent by the first network device and the power transfer signal sent by the second network device, until the power status of the terminal device satisfies the power information requested by the terminal device, and then cooperative power transfer is stopped.

S49': The terminal device sends a signal adjustment request to the third network device.

Correspondingly, the third network device receives the signal adjustment request from the terminal device, and adjusts the power transfer signal of the first network device and/or the power transfer signal of the second network device based on the signal adjustment request, so that the receive peak of the power transfer signal of the second network device overlaps the receive peak of the power transfer signal of the first network device again.

Specifically, in an implementation, that the terminal device sends the signal adjustment request to the third network device may be understood as follows: When determining that a second phase difference between the power transfer signal of the first network device and the power transfer signal of the second network device is greater than or equal to the phase difference threshold, the terminal device sends the signal adjustment request to the third network device.

In another implementation, that the terminal device sends the signal adjustment request to the third network device may be understood as follows: When determining that a second time difference between the power transfer signal of the first network device and the power transfer signal of the second network device is greater than or equal to the time difference threshold, the terminal device sends the signal adjustment request to the third network device.

In another implementation, that the terminal device sends the signal adjustment request to the third network device may be understood as follows: When determining that a second peak difference between the power transfer signal of the first network device and the power transfer signal of the second network device is greater than or equal to the peak difference threshold, the terminal device sends the signal adjustment request to the third network device.

In another implementation, that the terminal device sends the signal adjustment request to the third network device may be understood as follows: When determining that an absolute value of a difference between a first reference signal received power RSRP value and a second RSRP value of the first network device or the second network device is greater than or equal to the RSRP threshold, the terminal device sends the signal adjustment request to the third network device. The second RSRP value is a previous RSRP value of the first RSRP value.

In another implementation, after the terminal device sends the power transfer request to the third network device or receives the power transfer configuration information, and before the terminal device sends the signal adjustment request, the terminal device may further start a second timer. After the second timer reaches the second timing duration, the terminal device sends the signal adjustment request to the third network device.

The signal adjustment request may include one or more of the following information: a second phase difference, a second time difference, a second peak difference, and RSRP change information. It may be understood that when the signal adjustment request includes the RSRP change information, the first network device may estimate phase difference information, that is, the second phase difference, based on the RSRP change information, and then adjust the power transfer signal.

It should be noted that the third network device may adjust the power transfer signal of the first network device and/or the power transfer signal of the second network device based on the signal adjustment request in the following three implementations.

Implementation 1: The third network device determines third phase offset information, third time offset information, or third peak offset information based on the signal adjustment request, and controls, based on the third phase offset information, the third time offset information, or the third peak offset information, the first network device to adjust the power transfer signal of the first network device, so that the receive peak of the power transfer signal of the second network device overlaps the receive peak of the power transfer signal of the first network device again.

Implementation 2: After receiving the signal adjustment request of the terminal device, the third network device determines fourth phase offset information, fourth time offset information, or fourth peak offset information, and controls, based on the fourth phase offset information, the fourth time offset information, or the fourth peak offset information, the second network device to adjust the power transfer signal of the second network device, so that the receive peak of the power transfer signal of the second network device overlaps the receive peak of the power transfer signal of the first network device again.

Implementation 3: The third network device determines third phase offset information, third time offset information, or third peak offset information, and fourth phase offset information, fourth time offset information, or fourth peak offset information based on the signal adjustment request. Then, the first network device controls, based on the third phase offset information, the third time offset information, or the third peak offset information, the first network device to adjust the power transfer signal of the first network device, and controls, based on the fourth phase offset information, the fourth time offset information, or the fourth peak offset information, the second network device to adjust the power transfer signal of the second network device, so that the receive peak of the power transfer signal of the second network device overlaps the receive peak of the power transfer signal of the first network device again.

It should be noted that the third phase offset information and/or the fourth phase offset information may be determined based on the second phase difference. The third time offset information and/or the fourth time offset information may be determined based on the second time difference. The third peak offset information and/or the fourth peak offset information may be determined based on the second peak difference.

For more understanding of determining the third phase offset information and/or the fourth phase offset information based on the second phase difference, determining the third time offset information and/or the fourth time offset information based on the second time difference, or determining the third peak offset information and/or the fourth peak offset information based on the second peak difference, refer to the related descriptions in S49. Details are not described herein again.

S410': The first network device and the second network device send adjusted power transfer signals to the terminal device.

Correspondingly, the terminal device receives the adjusted power transfer signals sent by the first network device and the second network device. Receive peaks of the adjusted power transfer signals of the network devices overlap.

It may be understood that because the terminal device moves, the power transfer signal of the first network device and the power transfer signal of the second network device no longer overlap or there are less overlapped receive peaks. The signal adjustment request is sent to the third network device, so that the third network device can control the power transfer signal of the first network device and the power transfer signal of the second network device to overlap again.

It should be noted that, a sequence of numbers of the steps in this embodiment of this application does not indicate an execution sequence of the steps, and the execution sequence is specifically determined based on an actual application scenario. This is not limited herein. Each step in this embodiment of this application may be separately used as an embodiment, or may be used as an optional step to be combined with one or more steps in this embodiment of this application. This is not limited herein. For example, step S401 and step S402 may be independently used as an embodiment, or may be used as optional steps to be combined with one or more steps in this embodiment of this application. This is not limited herein. For another example, step S41a and step S42a may be independently used as an embodiment, or may be used as optional steps to be combined with one or more steps in this embodiment of this application. This is not limited herein. For another example, step S41b and step S42b may be independently used as an embodiment, or may be used as optional steps to be combined with one or more steps in this embodiment of this application. This is not limited herein. For another example, step S43 to step S48 may be independently used as an embodiment, or may be used as optional steps to be combined with one or more steps in this embodiment of this application. This is not limited herein. For another example, step S49 and step S410 may be independently used as an embodiment, or may be used as optional steps to be combined with one or more steps in this embodiment of this application. This is not limited herein. For another example, step S43' to step S48' may be independently used as an embodiment, or may be used as optional steps to be combined with one or more steps in this embodiment of this application. This is not limited herein. For another example, step S49' and step S410' may be independently used as an embodiment, or may be used as optional steps to be combined with one or more steps in this embodiment of this application. This is not limited herein.

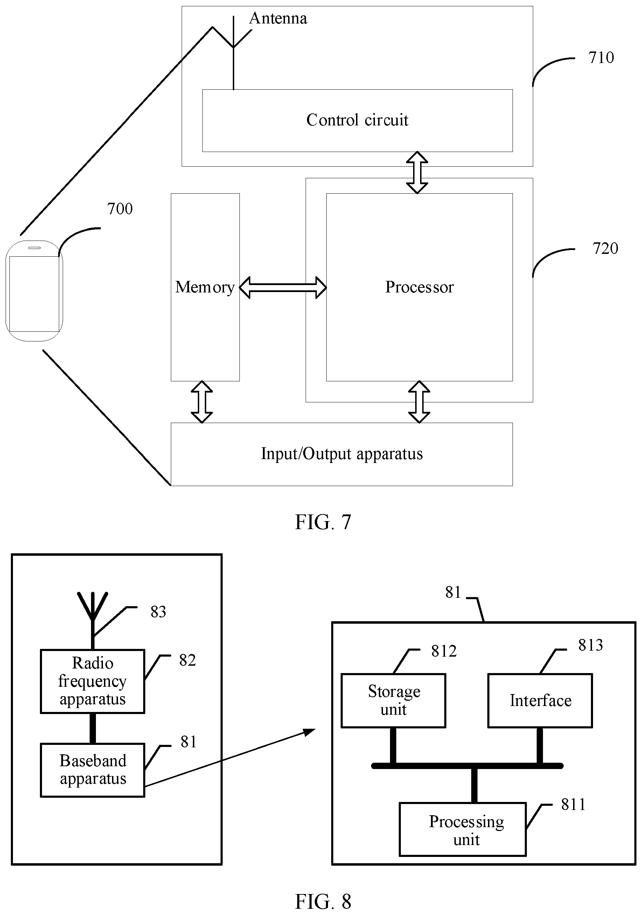

The following describes in detail communication apparatuses according to this application with reference to FIG. 5 and FIG. 8.

FIG. 5 is a diagram of a structure of a communication apparatus according to an embodiment of this application. The communication apparatus shown in FIG. 5 may be configured to perform some or all functions of the terminal device in the method embodiment described in FIG. 4. The apparatus may be a terminal device, an apparatus in a terminal device, or an apparatus that can be used in combination with a terminal device. The communication apparatus may alternatively be a chip system. The communication apparatus shown in FIG. 5 may include a transceiver unit 501 and a processing unit 502. The processing unit 502 is configured to perform data processing. The transceiver unit 501 is integrated with a receiving unit and a sending unit. The transceiver unit 501 may also be referred to as a communication unit. Alternatively, the transceiver unit 501 may be split into a receiving unit and a sending unit. The descriptions of the processing unit 502 below are similar to those of the transceiver unit 501, and details are not described below again.

The transceiver unit 501 is configured to receive a cooperative power transfer signal, where the cooperative power transfer signal is a superposed signal of a power transfer signal sent by a first network device and a power transfer signal sent by a second network device, and a receive peak of the power transfer signal of the first network device overlaps a receive peak of the power transfer signal of the second network device.

The processing unit 502 is configured to process the cooperative power transfer signal.

For another possible implementation of the communication apparatus, refer to related descriptions of the functions of the terminal device in the method embodiment corresponding to FIG. 4. Details are not described herein again.

FIG. 6 is a diagram of a structure of another communication apparatus according to an embodiment of this application. The communication apparatus shown in FIG. 6 may be configured to perform some or all functions of the access network device in the method embodiment described in FIG. 4. The apparatus may be an access network device, or may be an apparatus in an access network device, or may be an apparatus that can be used in combination with an access network device. The communication apparatus may alternatively be a chip system. The communication apparatus shown in FIG. 6 may include a transceiver unit 601 and a processing unit 602.

The transceiver unit 601 is configured to send a cooperative power transfer request to a second network device, where the cooperative power transfer request is used for requesting the second network device and the first network device to perform cooperative power transfer.

The transceiver unit 601 is configured to receive a cooperative power transfer response from the second network device, where the cooperative power transfer response indicates that the second network device accepts cooperative power transfer.

The processing unit 602 is configured to send a power transfer signal to a terminal device.

For another possible implementation of the communication apparatus, refer to related descriptions of functions of the access network device in the method embodiment corresponding to FIG. 4. Details are not described herein again.

FIG. 7 is a diagram of a structure of another communication apparatus according to an embodiment of this application. As shown in FIG. 7, the communication apparatus may be the terminal device described in embodiments of this application, and is configured to implement the functions of the terminal device in FIG. 4. For ease of description, FIG. 7 shows only main components of the terminal device 700. As shown in FIG. 7, the terminal device 700 includes a processor, a memory, a control circuit, an antenna, and an input/output apparatus. The processor is mainly configured to: process a communication protocol and communication data, control the entire terminal device 700, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in the form of an electromagnetic wave. The input/output apparatus, for example, a touchscreen, a display, a microphone, or a keyboard, is mainly configured to receive data input by a user and output data to the user.

For example, the terminal device 700 is a mobile phone. After the terminal device 700 is powered on, the processor may read a software program in a storage unit, interpret and execute instructions of the software program, and process data of the software program. When data needs to be sent wirelessly, after performing baseband processing on the to-be-sent data, the processor outputs a baseband signal to the control circuit, and after performing radio frequency processing on the baseband signal, the control circuit sends a radio frequency signal in the form of an electromagnetic wave through the antenna. When data is sent to the terminal device 700, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 7 shows only one memory and only one processor. In some embodiments, the terminal device 700 may include a plurality of processors and a plurality of memories. The memory may also be referred to as a storage medium, a storage device, or the like. This is not limited in embodiments of the present invention.

In an optional implementation, the processor may include a baseband processor and a central processing unit. The baseband processor is mainly configured to process the communication protocol and the communication data. The central processing unit is mainly configured to: control the entire terminal device 700, execute the software program, and process the data of the software program. The processor in FIG. 7 integrates functions of the baseband processor and the central processing unit. A person skilled in the art may understand that the baseband processor and the central processing unit may alternatively be processors independent of each other, and are interconnected by using a technology such as a bus. The terminal device 700 may include a plurality of baseband processors to adapt to different network standards, the terminal device 700 may include a plurality of central processing units to enhance a processing capability of the terminal device 700, and components of the terminal device 700 may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in the form of a software program, and the processor executes the software program to implement a baseband processing function.

In an example, the antenna and the control circuit that have receiving and sending functions may be considered as a transceiver unit 710 of the terminal device 700, and the processor having a processing function may be considered as a processing unit 720 of the terminal device 700. As shown in FIG. 7, a terminal device 700 includes the transceiver unit 710 and the processing unit 720. The transceiver unit may also be referred to as a transceiver, a transceiver machine, a transceiver apparatus, or the like. Optionally, a component configured to implement the receiving function in the transceiver unit 710 may be considered as a receiving unit, and a component configured to implement the sending function in the transceiver unit 710 may be considered as a sending unit. That is, the transceiver unit 710 includes the receiving unit and the sending unit. For example, the receiving unit may also be referred to as a receiver machine, a receiver, a receiving circuit, or the like. The sending unit may be referred to as a transmitter machine, a transmitter, a transmitting circuit, or the like.

FIG. 8 is a diagram of a structure of another communication apparatus according to an embodiment of this application. As shown in FIG. 8, the communication apparatus may be the network device described in embodiments of this application, and is configured to implement the functions of the network device in FIG. 4. The network device includes: a baseband apparatus 81, a radio frequency apparatus 82, and an antenna 83. In an uplink direction, the radio frequency apparatus 82 receives, via the antenna 83, information sent by the terminal device, and sends, to the baseband apparatus 81 for processing, the information sent by the terminal device. In a downlink direction, the baseband apparatus 81 processes the information of the terminal device, and sends processed information to the radio frequency apparatus 82; and the radio frequency apparatus 82 processes the information of the terminal device, and then sends processed information to the terminal device via the antenna 83.

The baseband apparatus 81 includes one or more processing units 811, a storage unit 812, and an interface 813. The processing unit 811 is configured to support the network device in performing the functions of the network device in the foregoing method embodiments. The storage unit 812 is configured to store a software program and/or data. The interface 813 is configured to exchange information with the radio frequency apparatus 82. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 812 and the processing unit 811 may be located in a same chip, that is, an on-chip storage element. Alternatively, the storage unit 812 and the processing unit 811 may be located in different chips, that is, an off-chip storage element. The storage unit 812 may be one memory, or may be a general term of a plurality of memories or storage elements.

The network device may implement some or all of the steps in the foregoing method embodiments in the form of scheduling a program by using one or more processing units. For example, corresponding functions of the network device in FIG. 4 are implemented. The one or more processing units may support radio access technologies of a same standard, or may support radio access technologies of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for indicating a computing device (which may be a personal computer, a server, or a network device) to perform all or a part of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in the form of an instruction or a data structure and that can be accessed by a computer. In addition, through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A cooperative power transfer method, wherein the method is applied to a terminal device and comprises:

   receiving a cooperative power transfer signal, wherein the cooperative power transfer signal is a superposed signal of a power transfer signal sent by a first network device and a power transfer signal sent by a second network device, and a receive peak of the power transfer signal of the first network device overlaps a receive peak of the power transfer signal of the second network device; and
   processing the cooperative power transfer signal.

2. The method according to claim 1, wherein the method further comprises:

   receiving a first measurement signal and a second measurement signal, wherein the first measurement signal and the second measurement signal are used for determining a first measurement result, and the first measurement result is used for determining the power transfer signal of the first network device and/or the power transfer signal of the second network device; and
   sending the first measurement result to the first network device.

3. The method according to claim 1, wherein the method further comprises:

   receiving a first measurement signal and a second measurement signal, wherein the first measurement signal and the second measurement signal are used for determining a first measurement result, and the first measurement result is used for determining the power transfer signal of the first network device and/or the power transfer signal of the second network device; and
   sending the first measurement result to a third network device, wherein the third network device is a central unit CU, and the first network device and the second network device are distributed units DUs.

4. The method according to claim 1, wherein the method further comprises:

   receiving a first measurement signal and a second measurement signal, wherein the first measurement signal and the second measurement signal are used for determining a first measurement result, and the first measurement result is used for determining the power transfer signal of the first network device and/or the power transfer signal of the second network device; and
   sending the first measurement result to a third network device, wherein the third network device is a CU or an access network device, and the first network device and the second network device are transmission reception points TRPs.

5. The method according to any one of claims 2 to 4, wherein the method further comprises:

   receiving measurement configuration information of the first measurement signal and measurement configuration information of the second measurement signal; and
   the receiving a first measurement signal and a second measurement signal comprises:
   receiving the first measurement signal based on the measurement configuration information of the first measurement signal, and receiving the second measurement signal based on the measurement configuration information of the second measurement signal.

6. The method according to claim 1, wherein the method further comprises:

   receiving measurement configuration information; and
   sending a third measurement signal based on the measurement configuration information, wherein the third measurement signal is used for determining the power transfer signal of the first network device and/or the power transfer signal of the second network device.

7. The method according to any one of claims 2 to 5, wherein the first measurement result comprises at least one of the following information:
a first phase difference, a first time difference, or a first peak difference between the first measurement signal and the second measurement signal.

8. The method according to any one of claims 1 to 7, wherein the method further comprises:
sending a power transfer request, wherein the power transfer request comprises power information and power transfer time information that are requested by the terminal device.

9. The method according to claim 8, wherein the method further comprises:

   receiving power transfer configuration information; and
   the receiving a cooperative power transfer signal comprises:
   receiving the cooperative power transfer signal based on the power transfer configuration information.

10. The method according to claim 9, wherein the power transfer configuration information comprises one or more of the following information:
waveform information, frequency information, time domain resource information, frequency domain resource information, first timing duration, and a first power threshold.

11. The method according to claim 10, wherein the method further comprises:

    starting a first timer after sending the power transfer request or receiving the power transfer configuration information; and
    after the first timer reaches the first timing duration, sending power status indication information, wherein the power status indication information indicates a power status of the terminal device.

12. The method according to claim 10, wherein the method further comprises:
when power in the terminal device is greater than or equal to the first power threshold, sending power status indication information, wherein the power status indication information indicates a power status of the terminal device.

13. The method according to any one of claims 4 to 6, wherein the method further comprises:
sending a signal adjustment request, wherein the signal adjustment request indicates to adjust the power transfer signal of the first network device and/or the power transfer signal of the second network device.

14. The method according to any one of claims 9 to 11, wherein the signal adjustment request comprises one or more of the following information:
a second phase difference, a second time difference, and a second peak difference between the power transfer signal of the first network device and the power transfer signal of the second network device, and reference signal received power RSRP change information of the power transfer signal of the first network device or the power transfer signal of the second network device.

15. A cooperative power transfer method, wherein the method is applied to a first network device and comprises:

    sending a cooperative power transfer request to a second network device, wherein the cooperative power transfer request is used for requesting the second network device and the first network device to perform cooperative power transfer;
    receiving a cooperative power transfer response from the second network device, wherein the cooperative power transfer response indicates that the second network device accepts cooperative power transfer; and
    sending a power transfer signal to a terminal device.

16. The method according to claim 15, wherein the method further comprises:

    receiving a power transfer request from the terminal device, wherein the power transfer request comprises power information and power transfer time information that are requested by the terminal device; and
    the sending a cooperative power transfer request to a second network device comprises:
    sending the cooperative power transfer request to the second network device in response to the power transfer request.

17. The method according to claim 16, wherein the method further comprises:

    receiving power status indication information from the terminal device, wherein the power status indication information indicates a power status of the terminal device; and

when the power status of the terminal device satisfies the power information requested by the terminal device, stopping sending the power transfer signal to the terminal device, and/or sending a cooperative power transfer release message to the second network device.

18. The method according to any one of claims 15 to 17, wherein the method further comprises:

sending power transfer configuration information to the terminal device; and
the sending a power transfer signal to a terminal device comprises:
sending the power transfer signal to the terminal device based on the power transfer configuration information.

19. The method according to claim 18, wherein the power transfer configuration information comprises one or more of the following information:
waveform information, frequency information, time domain resource information, frequency domain resource information, first timing duration, and a first power threshold.

20. The method according to any one of claims 14 to 19, wherein the method further comprises:

sending measurement configuration information of a first measurement signal and measurement configuration information of a second measurement signal to the terminal device;
sending the first measurement signal to the terminal device, wherein the first measurement signal and the second measurement signal are used for determining a first measurement result, and the first measurement result is used for determining a power transfer signal of the first network device and/or a power transfer signal of the second network device; and
receiving the first measurement result from the terminal device.

21. The method according to claim 20, wherein the first measurement result comprises at least one of the following information:
a first phase difference, a first time difference, and a first peak difference between the first measurement signal and the second measurement signal.

22. The method according to any one of claims 15 to 21, wherein the method further comprises:
receiving a signal adjustment request from the terminal device, wherein the signal adjustment request indicates to adjust the power transfer signal of the first network device and/or the power transfer signal of the second network device.

23. The method according to claim 22, wherein the signal adjustment request comprises one or more of the following information:
a second phase difference, a second time difference, and a second peak difference between the power transfer signal of the first network device and the power transfer signal of the second network device, and reference signal received power RSRP change information of the power transfer signal of the first network device or the power transfer signal of the second network device.

24. A communication apparatus, comprising a unit or a module configured to perform the method according to any one of claims 1 to 23.

25. A communication apparatus, comprising:

one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 23.

26. A computer-readable storage medium, wherein the storage medium stores a computer program or instructions, and when the computer program or the instructions are executed by a computer, the method according to any one of claims 1 to 23 is implemented.

27. A computer program product, comprising computer program code, wherein the computer program code implements the method according to any one of claims 1 to 23 when run on a computer.

FIG. 1

Antenna    Matching network    Diode rectifier    Low-pass filter

FIG. 2

FIG. 3a

FIG.3b

A terminal device receives a cooperative power transfer signal —— S401

The terminal device processes the cooperative power transfer signal —— S402

FIG. 4

Transceiver unit —— 501

Processing unit —— 502

Communication apparatus

FIG. 5

Transceiver unit —— 601

Processing unit —— 602

Communication apparatus

FIG. 6

FIG. 7

FIG. 8

# EP 4 525 316 A1

<table>
<tr><td colspan="2" align="center">INTERNATIONAL SEARCH REPORT</td><td colspan="2">International application No.<br><br>**PCT/CN2023/091363**</td></tr>
<tr><td colspan="4">**A. CLASSIFICATION OF SUBJECT MATTER**<br>H04B5/00(2006.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br>IPC: H04B</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>CNABS; CNTXT; VEN; EPTXT; USTXT; WOTXT; CNKI: 无线, 充电, 电力, 传输, 协同, 同时, 波峰, 重叠, 同步, 波形, 相同, 发送, 请求, 响应, wireless, charge, power, transfer, transmit, WPT, wave, peak, cooperative, response, request</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>X</td><td colspan="2">JP 2018085919 A (LG INNOTEK CO., LTD.) 31 May 2018 (2018-05-31)<br>description, paragraphs [0074]-[0091], [0442], and [0443], and figure 2</td><td>1, 2, 5, 6, 8-14, 24-27</td></tr>
<tr><td>X</td><td colspan="2">WO 2018196321 A1 (ZHONG HUI POWERISE WIRELESS POWER TECHNOLOGY CO., LTD.) 01 November 2018 (2018-11-01)<br>description, p. 5, line 26-p. 11, line 2</td><td>1, 2, 5, 6, 8-14, 24-27</td></tr>
<tr><td>Y</td><td colspan="2">JP 2018085919 A (LG INNOTEK CO., LTD.) 31 May 2018 (2018-05-31)<br>description, paragraphs [0074]-[0091], [0442], and [0443], and figure 2</td><td>15, 18-20, 22, 23</td></tr>
<tr><td>Y</td><td colspan="2">CN 109672492 A (HUAWEI TECHNOLOGIES CO., LTD.) 23 April 2019 (2019-04-23)<br>description, paragraphs [0156]-[0166], and figure 7</td><td>15, 18-20, 22, 23</td></tr>
<tr><td>Y</td><td colspan="2">WO 2018196321 A1 (ZHONG HUI POWERISE WIRELESS POWER TECHNOLOGY CO., LTD.) 01 November 2018 (2018-11-01)<br>description, p. 5, line 26-p. 11, line 2</td><td>15, 18-20, 22, 23</td></tr>
<tr><td>A</td><td colspan="2">CN 110707828 A (ZTE CORP.) 17 January 2020 (2020-01-17)<br>entire document</td><td>1-27</td></tr>
<tr><td colspan="2">☑ Further documents are listed in the continuation of Box C.</td><td colspan="2">☑ See patent family annex.</td></tr>
<tr><td colspan="2">* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed</td><td colspan="2">"T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family</td></tr>
<tr><td colspan="2">Date of the actual completion of the international search<br><br>**17 July 2023**</td><td colspan="2">Date of mailing of the international search report<br><br>**03 August 2023**</td></tr>
<tr><td colspan="2">Name and mailing address of the ISA/CN<br><br>**China National Intellectual Property Administration (ISA/CN)**<br>**China No. 6, Xitucheng Road, Jimenqiao, Haidian District, Beijing 100088**</td><td colspan="2">Authorized officer<br><br><br><br><br>Telephone No.</td></tr>
</table>

Form PCT/ISA/210 (second sheet) (July 2022)

**INTERNATIONAL SEARCH REPORT**

International application No.

**PCT/CN2023/091363**

**C.    DOCUMENTS CONSIDERED TO BE RELEVANT**

| Category* | Citation of document, with indication, where appropriate, of the relevant passages | Relevant to claim No. |
|---|---|---|
| A | CN 111216587 A (BEIJING DIDI INFINITY TECHNOLOGY AND DEVELOPMENT CO., LTD.) 02 June 2020 (2020-06-02)<br>entire document | 1-27 |

Form PCT/ISA/210 (second sheet) (July 2022)

## INTERNATIONAL SEARCH REPORT
### Information on patent family members

International application No.

**PCT/CN2023/091363**

| Patent document cited in search report | | | Publication date (day/month/year) | Patent family member(s) | Publication date (day/month/year) |
|---|---|---|---|---|---|
| JP | 2018085919 | A | 31 May 2018 | None | |
| WO | 2018196321 | A1 | 01 November 2018 | None | |
| CN | 109672492 | A | 23 April 2019 | None | |
| CN | 110707828 | A | 17 January 2020 | None | |
| CN | 111216587 | A | 02 June 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210609784